# EUROPÄISCHE PATENTSCHRIFT

(11) **EP 1 787 067 B1**
(45) Veröffentlichungstag und Bekanntmachung des Hinweises auf die Patenterteilung: **30.07.2008**
(21) Anmeldenummer: 04786913.6
(22) Anmeldetag: 06.09.2004
(51) Int. Cl.: F24J 2/14, F24J 2/05, F24J 2/54, F24J 2/46

(54) **Absorberrohr**
Absorber tube
Tube d'absorbeur

(43) Veröffentlichungstag der Anmeldung: 23.05.2007
(73) Patentinhaber: Schweyher, Holger, 74357 Bönnigheim (DE)
(72) Erfinder: Schweyher, Holger, 74357 Bönnigheim (DE)
(74) Vertreter: Dreiss, Fuhlendorf, Steimle & Becker
(86) Internationale Anmeldenummer: PCT/EP2004/009918
(87) Internationale Veröffentlichungsnummer: WO 2006/027003

(56) Entgegenhaltungen:
- WO-A-02/103256
- WO-A-20/04066401
- DE-A1- 10 036 746
- DE-A1- 10 231 467
- DE-A1- 19 857 125
- GB-A- 1 508 199
- GB-A- 2 018 973
- GB-A- 2 235 786
- US-A- 1 683 266
- US-A- 3 841 738
- US-A- 4 098 264
- US-A- 4 138 994
- US-A- 4 183 351
- US-A- 4 268 332
- US-A- 4 326 503
- US-A- 4 561 423
- US-B1- 6 705 311

## Beschreibung

Die Erfindung geht aus von einem Absorberrohr nach dem Oberbegriff des Anspruchs 1.

Die heute auf dem Markt erhältlichen Absorberrohre bestehen aus einem Zentralrohr, in welchem ein Wärmeträger, wie beispielsweise Thermoöl oder Wasser/Wasserdampf zirkuliert und einem das Zentralrohr umgebenden Hüllrohr aus Glas. Bei Absorberrohren nach dem Stand der Technik werden jeweils Abschnitte von etwa 4 m Länge zu einem Segment zusammengefasst. Am vorderen Ende und am hinteren Ende des Segmentes werden das Zentralrohr und Hüllrohr gasdicht miteinander verbunden, beispielsweise durch Löten. Um die Durchmesserunterschiede zwischen Zentralrohr und Hüllrohr auszugleichen, sind Flansche vorgesehen. Die maximale Länge dieser Segmente ist wegen der unterschiedlichen Wärmedehnungen von Zentralrohr und Hüllrohr sowie der Durchbiegung des Zentralrohrs auf etwa 4 m beschränkt. Eine Vielzahl solcher Segmente wird in Reihe geschaltet, was mit Absorberrohren nach dem Stand der Technik wegen der thermischen Längenänderung bis zu einer Länge von etwa 200 m möglich ist. Zwischen den in Reihe geschalteten Segment gibt es kurze Verbindungsstücke zwischen den Segmenten der Absorberrohre, die nur einen geringen Beitrag zur Energieeinkopplung in den Wärmeträger im Zentralrohr leisten. Dies bedeutet, dass mit zunehmender wirksamer Länge der Absorberrohrsegmente der Wirkungsgrad des Absorberrohrs zunimmt und infolgedessen die Wirtschaftlichkeit des Parabolrinnenkraftwerks zunimmt. Aus der DE 102 31 467 A1 ist ein Absorberrohr mit einer Längenausgleichseinrichtung, umfassend ein Wellrohr, einen Festflansch und einen Dichtflansch, bekannt.

Der Erfindung liegt die Aufgabe zugrunde, ein verbessertes Absorberrohr bereit zu stellen.

Diese Aufgabe wird erfindungsgemäß durch ein Absorberrohr für Konzentratoren mit linear fokussierender Brennlinie, insbesondere für Parabolrinnenkollektoren und Fresnelllinsenkollektoren, mit mindestens einem Zentralrohr, mit einem transparentem Hüllrohr, wobei das mindestens eine Zentralrohr von dem Hüllrohr gasdicht umschlossen wird und mit einer Einrichtung zum Ausgleich axialer Längenänderungen von Zentralrohr und Hüllrohr dadurch gelöst, dass die Einrichtung zum Ausgleich axialer Längenänderung einen Kompensator, insbesondere einen Faltenbalg und/oder eine Rollmembran, einen axial verschiebbaren Dichtflansch und einen mit dem Zentralrohr gasdicht verbundenen Festflansch aufweist, dass das Wellrohr den Dichtflansch und den Festflansch gasdicht miteinander verbindet und dass an dem Dichtflansch eine Aufnahme für das Hüllrohr vorgesehen ist.

Der Dichtflansch ist dabei an dem mindestens einen Zentralrohr gelagert.

Bei besonders vorteilhaften Ausgestaltungen des erfindungsgemäßen Absorberrohrs ist die Aufnahme für das Hüllrohr als Absatz oder als Nut in einer Stirnfläche des Dichtflansches ausgeführt.

Dadurch ist es möglich, auf einfache Weise zwischen Hüllrohr und Zentralrohr einen luftleeren Raum zu schaffen, wobei die Wärmedehnungen zwischen Zentralrohr und Hüllrohr auf einfache Weise ausgeglichen werden können. Das erfindungsgemäße Absorberrohr ist nicht auf Baulängen ≤ (kleiner gleich) 4 m beschränkt, sondern es ist möglich, zwischen dem Festflansch und dem Dichtflansch eine Länge von bis zu 8 m zu überbrücken. Dadurch wird die wirksame Länge des erfindungsgemäßen Absorberrohrs im Verhältnis zur Gesamtlänge des Absorberrohrs erhöht, was den Wirkungsgrad des erfindungsgemäßen Absorberrohrs erhöht. Außerdem werden die Baukosten verringert, was sich ebenfalls positiv auf die Wirtschaftlichkeit des Parabolrinnenkraftwerks auswirkt.

Es hat sich als vorteilhaft erwiesen, wenn zwischen Dichtflansch und Hüllrohr ein Dichtring, insbesondere ein O-Ring oder ein C-Ring, vorgesehen ist. Diese Dichtringe können aus Metall oder aus temperaturbeständigen organischen Werkstoffen, wie Graphit, Polytetraflourethylen oder einer Kombination dieser Materialien, hergestellt werden. Durch die Verwendung dieser an sich bekannten Dichtringe kann die Abdichtung zwischen Festflansch und Hüllrohr einerseits sowie Dichtflansch und Hüllrohr andererseits weiter verbessert werden, was sich in einer besseren Aufrechterhaltung des Vakuums zwischen Hüllrohr und Zentralrohr zeigt. Dadurch wird der thermodynamische Wirkungsgrad des Absorberrohrs erhöht und die benötigte Pumpenergie zur Aufrechterhaltung des Vakuums zwischen Hüllrohr und Zentralrohr wird verringert. Durch die Verwendung von Dichtringen wird die Montage und Reparatur eines erfindungsgemäßen Absorberrohrs vereinfacht, so dass Reparaturen auch an installierten Absorberrohren direkt vor Ort vom Betriebspersonal des Kraftwerks vorgenommen werden können.

Um ein Aufrechterhalten des Vakuums zwischen Zentralrohr und Hüllrohr zu ermöglichen, kann beispielsweise am Festflansch ein Anschlussstutzen für eine Vakuumpumpe vorgesehen sein. Die Vakuumpumpe kann abhängig vom Unterdruck im Zwischenraum zwischen Hüllrohr und Zentralrohr eingeschaltet werden, so dass immer die Aufrechterhaltung eines Vakuums gewährleistet ist.

Um das Absorberrohr außerhalb der Brennlinie des Parabolrinnenkollektors sicher zu halten, kann der Kompensator von einem Halter in einen ersten Abschnitt und einen zweiten Abschnitt unterteilt werden, wobei der Halter mit dem ersten Abschnitt und dem zweiten Abschnitt gasdicht verbunden ist und der Halter das mindestens eine Zentralrohr radial abstützt.

Durch diese Maßnahme ist es möglich, die Gewichtskraft des Absorberrohrs über einen Halter aufzunehmen, ohne dass Wärmedehnungen des Zentralrohrs oder des Hüllrohrs auf den Halter übertragen werden. Dies ist dadurch möglich, dass das Zentralrohr in dem Halter axial verschieblich gelagert ist, so dass lediglich radiale Kräfte vom Zentralrohr auf den Halter übertragen werden können. Der Halter kann wahlweise an einer Tragstruktur des Reflektors oder fest mit dem Untergrund verbunden werden. Um die Reibung zwischen Halter und Zentralrohr zu verringern, kann zwischen Halter und Zentralrohr eine Lagerbüchse vorgesehen sein.

Es hat sich weiter als vorteilhaft erwiesen, wenn zwischen Festflansch und Dichtflansch mindestens ein Federelement vorgesehen ist, so dass die Anpressung der Flansche und des Hüllrohrs auf die Dichtringe erhöht wird und somit die Dichtheit verbessert wird. Wenn gewünscht, kann durch eine geeignete konstruktive Ausgestaltung des Festflansches oder des Dichtflansches die auf die Dichtringe wirkende Kraft in axialer Richtung begrenzt werden. Dadurch ist unter allen Umständen gewährleistet, dass einer oder mehrere Dichtringe nicht gequetscht oder auf eine andere Weise zerstört werden.

Um die Baulänge eines durchgehenden Absorberrohrs weiter zu steigern, kann das Hüllrohr aus mehreren Abschnitten, von beispielsweise mehr als 4 m Länge zusammengesetzt werden, wobei zwischen zwei benachbarten Abschnitten ein Zentrierflansch vorgesehen ist an dessen beiden Seiten je eine Aufnahme für einen Abschnitt des Hüllrohrs vorgesehen ist. Dieser Zentrierflansch kann an dem mindestens einen Zentralrohr gelagert werden. Mit der erfindungsgemäßen Ausgestaltung des Hüllrohrs ist es beispielsweise möglich, ein durchgehendes, aus mehreren Teilstücken miteinander verschweißten Teilstücken bestehendes, Zentralrohr von mehr als 200 m Länge zu bauen, auf das mehrere Segmente von Hüllrohren aufgeschoben werden. Zwischen den Hüllrohrsegmenten ist entweder ein Halter und/oder ein Zentrierflansch angeordnet, so dass einerseits gewährleistet ist, dass das Absorberrohr nicht durchhängt und andererseits das Hüllrohr stets relativ zum Absorberrohr zentriert ist. Durch diese Maßnahme wird die wirksame Länge des Absorberrohrs bezogen auf die Gesamtlänge weiter erheblich gesteigert, was sich, wie bereits erwähnt, positiv auf die Wirtschaftlichkeit des Parabolrinnenkraftwerks auswirkt. Ein weiterer Vorteil dieser Ausführungsform besteht darin, dass, wenn ein Segment eines Hüllrohrs bricht, auf einfachste Weise eine Reparatur des Absorberrohrs möglich ist. Und zwar wird die durch das kaputte Hüllrohr entstehende Lücke dadurch geschlossen, dass die Hüllrohrsegmente, welche sich neben der Lücke befinden, in die Lücke geschoben werden und zwar so lange, bis die Lücke an das Ende des Zentralrohrs gewandert ist. Dort muss dann ein Flansch abgenommen werden, es wird ein neues Hüllrohrsegment aufgeschoben, der Flansch wird wieder mit dem Zentralrohr verbunden und der Zwischenraum zwischen Hüllrohr und Zentralrohr vakuumiert. Dies bedeutet, dass es mit einfachsten Mitteln und ohne große Stillstandsverluste möglich ist, ein gesprungenes Hüllrohr zu ersetzen. Ermöglicht wird dies unter anderem dadurch, dass die Zentrierflansche auf dem Zentralrohr verschiebbar sind.

Vorteilhafte Ausgestaltungen des erfindungsgemäßen Absorberrohrs sehen vor, dass die Aufnahme für das Hüllrohr als Absatz oder als Nut in einer Stirnfläche des Zentrierflansches ausgeführt ist, und/oder dass zwischen Zentrierflansch und Hüllrohr ein Dichtring, insbesondere ein O-Ring oder ein C-Ring, vorgesehen ist.

Die Segmente herkömmlicher Absorberrohre sind wegen der Durchbiegung des zentralen Stahlrohrs auf eine Länge von vier Metern beschränkt, um es an den jeweiligen Enden abzustützen. Bei erfindungsgemäßen Zentralrohren aus Kohlefaserkeramik oder Kohlefaserkohlenstoff (CFC) mit gasdichtem Liner, vorzugsweise aus Stahl oder Nickelbasislegierung können wesentlich größere Abstände zwischen den Stützen realisiert werden. Allerdings beschränkt nun die Durchbiegung des transparenten Hüllrohrs die Segmentlänge des Absorberrohrs auf etwa acht Meter.
Die Länge des Absorberrohrs entspricht damit der Länge des Kollektors. Die geringe Wärmedehnung von CFC bietet hier den Vorteil, dass an den Enden nur geringe Längenänderungen ausgeglichen werden müssen. Das jeweils acht Meter lange umgebende Glashüllrohr ist an den Enden mit den jeweiligen Haltern der Absorberrohre gasdicht verbunden.

Die Dehnungsausgleiche marktgängiger Absorberrohre haben den Nachteil, dass sie einen geringeren Beitrag zur Wärmegewinnung leisten und gleichzeitig große Verluste durch Abstrahlung und Konvektion haben, was vor Allem bei geringer Solarstrahlung ein spürbarer Nachteil ist.

Weitere Vorteile und vorteilhafte Ausgestaltungen sind der nachfolgenden Zeichnung, deren Beschreibung und den Patentansprüchen entnehmbar.

Es zeigen:
- Figur 1: eine perspektivische Darstellung eines Ausführungsbeispiels eines Parabolrinnenkollektors,
- Figur 2: einen Querschnitt durch eine Tragstruktur und
- Figur 3: eine Seitenansicht eines Parabolrinnenkollektors.
- Fig. 4: einen Querschnitt durch ein erstes Ausführungsbeispiel eines erfindungsgemäßen Absorberrohrs,
- Fig. 5: einen Querschnitt durch ein zweites Ausführungsbeispiel eines erfindungsgemäßen Absorberrohrs,
- Fig. 6: einen Querschnitt durch ein drittes Ausführungsbeispiel eines erfindungsgemäßen Absorberrohrs,
- Fig. 7: ein erfindungsgemäßes Absorberrohr mit Halter,
- Fig. 8: ein Ausführungsbeispiel eines erfindungsgemäßen Absorberrohrs mit zwei Zentralrohren,
- Fig. 9: ein Ausschnitt aus einem erfindungsgemäßen Absorberrohr mit zwei Hüllrohrsegmenten und einem dazwischen angeordneten Zentrierflansch,
- Fig. 10a, b: Querschnitte durch zwei Ausführungsbeispiele erfindungsgemäßer Absorberrohre.

### Beschreibung der Ausführungsbeispiele

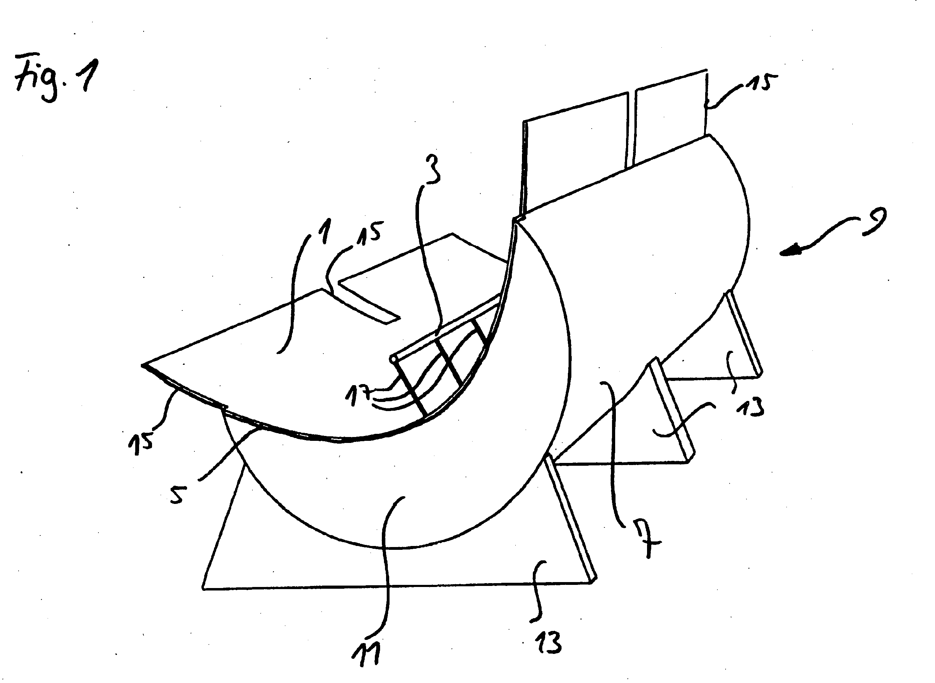

Figur 1 zeigt eine perspektivischer Darstellung eines Parabolrinnenkollektors. Der Parabolrinnenköllektor weist einen Reflektor 1 auf, der in der Regel aus Glas besteht, welches mit Silber beschichtet ist und somit als Spiegel wirkt. Im Querschnitt weist der Reflektor 1 die Form einer Parabel, in der Brennlinie (nicht dargestellt) des Reflektors 1 befindet sich ein Absorberrohr 3 in dem ein Wärmeträger, wie beispielsweise Thermoöl oder Wasser/Wasserdampf zirkuliert. Der Wärmeträger und der Aufbau des Absorberrohrs 3 sind in Figur 1 nicht dargestellt.

Um den Reflektor 1 zu unterstützen ist eine Tragstruktur vorgesehen, welche aus einer Innenschale 5 und einer Außenschale 7 besteht. Die Innenschale und die Außenschale können beispielsweise aus Verbundwerkstoffen mit einer Wandstärke von wenigen Millimetern hergestellt werden. Wie aus Figur 1 ersichtlich, unterstützt die Innenschale 5 den Reflektor 1 aus Glas großflächig, so dass erstens Verformungen des Reflektors 1, welche zu einer Veränderung des optischen Verhaltens führen würden, weitestgehend verhindert werden und außerdem keine unzulässigen mechanischen und thermischen Spannungen auf den Reflektor 1 während des Betriebs wirken. Durch die großflächige Unterstützung des Reflektors 1 durch die Innenschale ist auch die Gefahr von Glasbruch bei einem Sturm deutlich verringert.

Die Innenschale 5 und die Außenschale 7 sind fest miteinander verbunden und bilden einen vorzugsweise geschlossenen Torsionskasten. An seinen Enden kann der Torsionskasten 9 durch Endstücke 11 verschlossen werden. Dadurch erhöht sich die Torsionsfestigkeit des Torsionskastens 9 weiter.

Der Torsionskasten 9 ist mit der Außenschale 7 drehbar auf Stützen 13 gelagert. In Figur 1 sind die konstruktiven Details dieser Lagerung des Torsionskasten auf den Stützen 13 nicht dargestellt. Es hat sich jedoch als Vorteilhaft erwiesen, wenn eine Gleitlagerung mit einer Metall-Kunststoff-Paarung oder eine Kunststoff-Kunststoff-Paarung vorgesehen wird. Alternativ kann die Lagerung auch durch Wälzlager oder elektromagnetische Kräfte erfolgen. In der Mitte und an seinen Enden weisen der Reflektor 1 und die Innenschale 5 Aussparungen 15 auf. Diese Aussparung können notwendig sein, um einen Drehantrieb, mit dessen Hilfe der Torsionskasten 9 relativ zu den Stützen 13 verdreht wird, montieren und betätigen zu können. Der Drehantrieb ist in Figur 1 nicht dargestellt, es ist jedoch denkbar, beispielsweise mittels einer gekrümmten Zahnstange (nicht dargestellt) die mit der Außenschale 7 verbunden ist und einem an einer oder mehreren der Stützen 13 befestigten Schneckenrad, welches elektrisch angetrieben wird, die Drehung des Torsionskastens 9 und damit auch die Nachführung des Reflektors 1 nach der Sonne zu bewerkstelligen.

Alternativ können auch andere elektrische, hydraulische oder pneumatische Antriebe zur Verdrehung der Torsionskastens 9 relativ zu den Stützen 13 vorgesehen sein.

Damit sich das Absorberrohr 3 stets in der Brennlinie (nicht dargestellt) des Reflektors 1 befindet, sind mehrere Halter 17 vorgesehen, welche einenends an dem Absorberrohr 3 befestigt sind und anderenends mit der Tragstruktur 9 verbunden sind. Besonders vorteilhaft ist es, wenn die Halter 17 mit Spanten (nicht dargestellt) des Torsionskastens 9 verbunden sind.

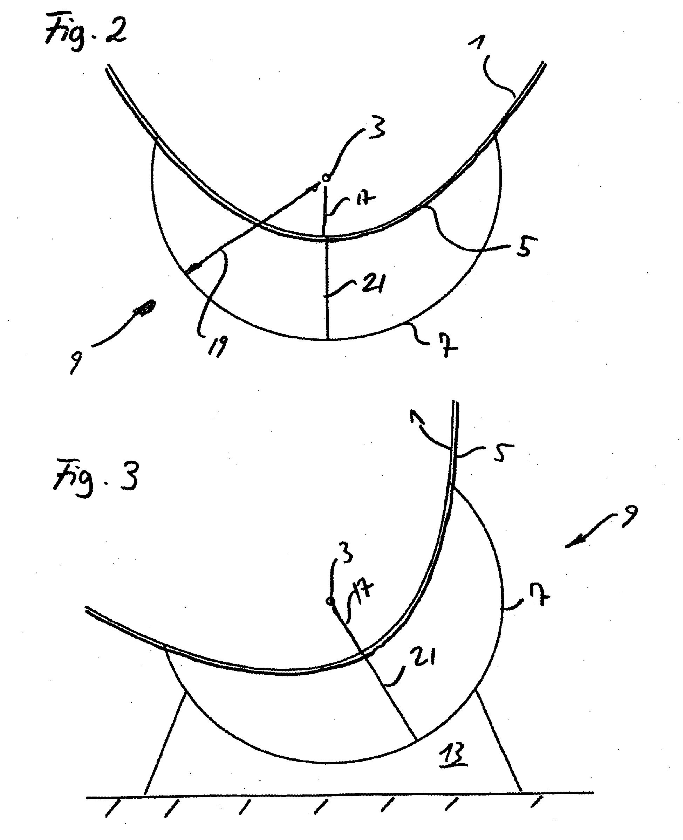

In Figur 2 ist der Parabolrinnenkollektor ohne Stützen 13 in einer Seitenansicht bzw. im Querschnitt dargestellt. Aus dieser Darstellung wird ersichtlich, dass sowohl der Reflektor 1 als auch die Innenschale 5 im Querschnitt die Form einer Parabel haben und dass das Absorberrohr 3 im Brennpunkt dieser Parabel angeordnet ist.

Des Weiteren wurde versucht, durch den Doppelpfeil 19 zu verdeutlichen, dass die Außenschale 7 im Querschnitt die Form eines Kreissegments hat und dass der Mittelpunkt dieses Kreissegments mit dem Brennpunkt des Reflektors 1 und damit auch mit dem Ort des Absorberrohr 3 zusammenfällt. Dies bedeutet, dass durch ein Verdrehen des Torsionskastens 9 relativ zu den Stützen 13 (nicht dargestellt) eine einfache und sehr genaue Nachführung des Reflektors 1 nach der Sonne möglich ist, ohne dass das Absorberrohr 3 aus der Brennlinie wandert.

In Figur 2 ist auch zu erkennen, dass in dem Torsionskasten 9 ein Längsholm 21 vorhanden ist, und dass der Halter 17 in direkter Verlängerung des Längsholms 21 angeordnet ist. Dadurch wird die Krafteinleitung der vom Halter 17 auf den Torsionskasten 9 übertragenen Kräfte weiter verbessert.

In Figur 3 ist das Ausführungsbeispiel gemäß Figur 1 in einer Seitenansicht dargestellt. Durch den Vergleich der zwei Positionen des Reflektors 1 in den Figuren 2 und 3 wird deutlich, wie die Nachführung des Reflektors 1 durch Drehen des Torsionskastens 9 relativ zu den Stützen auf einfachste Weise bewerkstelligt kann.

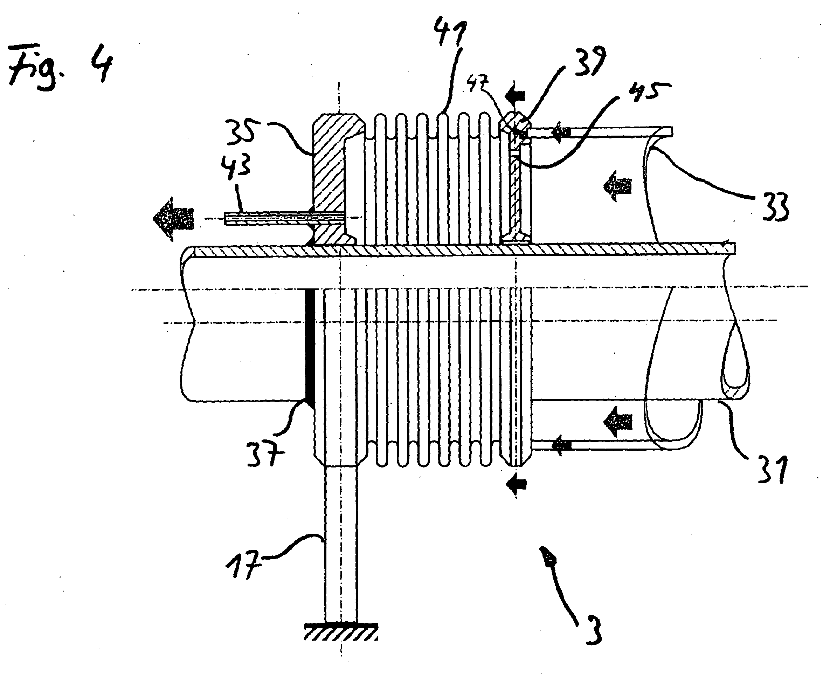

Fig. 4 ist ein erstes Ausführungsbeispiel eines erfindungsgemäßen Absorberrohrs 3 im Querschnitt dargestellt. Das Absorberrohr 3 besteht aus einem Zentralrohr 31, welches in der Regel aus Metall, insbesondere aus Stahl, besteht. Das Zentralrohr 31 wird von einem Hüllrohr 33 aus einem transparenten Werkstoff, insbesondere Glas, allseitig umgeben. Der Zwischenraum zwischen Hüllrohr 33 und Zentralrohr 31 ist vakuumiert. An dem Zentralrohr 31 ist ein Festflansch 35 durch eine Schweißnaht 37 gasdicht befestigt. Selbstverständlich kann der Festflansch 35 auch auf andere Weise als durch Schweißen mit dem Zentralrohr 31 insbesondere auch lösbar verbunden werden. Wichtig ist jedoch, dass an der Verbindung von Festflansch 35 und Zentralrohr 31 keine Umgebungsluft in den Zwischenraum zwischen Hüllrohr 33 und Zentralrohr 31 eindringen kann. Bei dem in Fig. 4 gezeigten Ausführungsbeispiel schließt an den Festflansch 35 ein Halter 17 an, der es erlaubt, das Absorberrohr 3 mit dem Torsionskasten des Parabolrinnenkollektors oder mit dem Untergrund fest zu verbinden.

Um die unterschiedlichen Wärmedehnungen von Hüllrohr 33 und Zentralrohr 31 ausgleichen zu können, ist das Hüllrohr 33 nicht direkt mit dem Festflansch 35 verbunden, sondern ist dichtend mit einem Dichtflansch 39 verbunden. Der Dichtflansch 39 wiederum ist über einen Kompensator 41 mit dem Festflansch 35 verbunden. Der Kompensator 41 kann beispielsweise mit dem Festflansch 35 verlötet, verschweißt oder verklebt werden. Gleiches gilt für die Verbindung zwischen Kompensator 41 und Dichtflansch 39. Der Dichtflansch 39 kann in axialer Richtung auf dem Zentralrohr 31 verschoben werden, so dass die unterschiedlichen Wärmedehnungen von Hüllrohr 33 und Zentralrohr 31 durch den Kompensator 41 ohne weiteres ausgeglichen werden können. Damit die Reibung zwischen Dichtflansch 39 und Zentralrohr 31 verringert wird, kann am Dichtflansch 39 eine Lagerbüchse (nicht dargestellt) vorgesehen sein.

Im Festflansch 35 ist ein Anschlussstutzen 43 vorgesehen, an den eine nicht dargestellte Vakuumpumpe angeschlossen werden kann. Der Einsatz einer fest installierten Vakuumpumpe für einen oder mehrere Kollektoren ist besonders vorteilhaft, um die Diffusion von Wasserstoff durch die Rohrwand des Zentralrohrs, die beim Wärmeträger Wasser/Dampf entsteht, durch diskontinuierliches Abpumpen zu lösen. Diese Vakuumpumpe ist ein großer Vorteil gegenüber dem bisherigen Absorberrohren mit sogenannten "Gettern", die Wasserstoff absorbieren, jedoch mit der Zeit wirkungslos werden.

Um einen Druckausgleich zwischen den beiden Seiten des Dichtflansches 39 zu gewährleisten, ist im Dichtflansch 39 eine Ausgleichsbohrung 45 vorgesehen. Das Hüllrohr 33 wird in dem Dichtflansch durch eine Ringnut 47 aufgenommen. Die Ringnut 47 ist gestuft ausgeführt. Eine erste Stufe der Nut 47 nimmt das Hüllrohr 33 auf, während eine zweite Stufe der Nut 47 einen Dichtring (nicht sichtbar in Fig. 4) aufnimmt. Der Dichtring, welcher als O-Ring oder metallischer C-Ring ausgeführt sein kann, dient dazu, das Eindringen von Umgebungsluft in den Zwischenraum zwischen Hüllrohr 33 und Zentralrohr 31 an der Verbindung von Dichtflansch 39 und Hüllrohr 33 zu verringern.

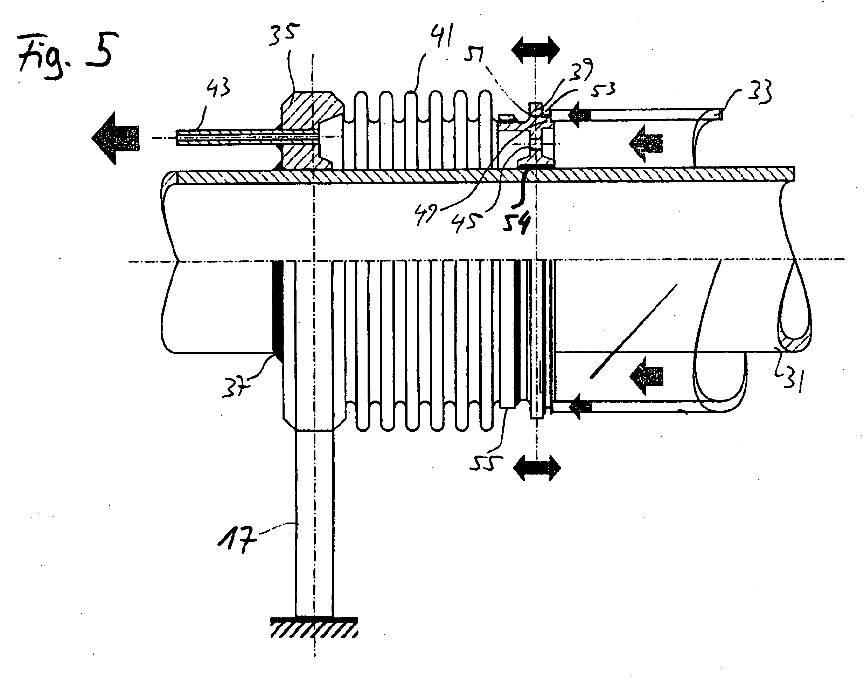

In Fig. 5 ist ein zweites Ausführungsbeispiel eines erfindungsgemäßen Absorberrohrs dargestellt. Gleiche Bauteile werden mit gleichen Bezugszeichen versehen und es gilt das bezüglich Fig. 4 Gesagte entsprechend. Es werden nachfolgend nur die Unterschiede der beiden Ausführungsbeispiele erläutert.

Anders als bei dem ersten Ausführungsbeispiel wird das Hüllrohr 33 bei dem zweiten Ausführungsbeispiel gem. Fig. 5 an dem Dichtflansch durch einen ersten Absatz 49 zentriert und gelagert. In einem zweiten Absatz 51, der an den ersten Absatz 49 anschließt, ist ein C-Ring 53 eingelegt. Durch den von außen auf den C-Ring 53 wirkenden Luftdruck, wird dieser gegen den Dichtflansch 39 und das Hüllrohr 33 gepresst, so dass die Dichtheit mit zunehmendem Unterdruck in dem Zwischenraum zwischen Hüllrohr 33 und Zentralrohr 31 zunimmt.

Bei dem Ausführungsbeispiel gem. Fig. 5 ist der Kompensator 41 mit dem Dichtflansch 39 verschweißt, wobei der Kompensator 41 von einem Stützring 55 umschlossen wird.

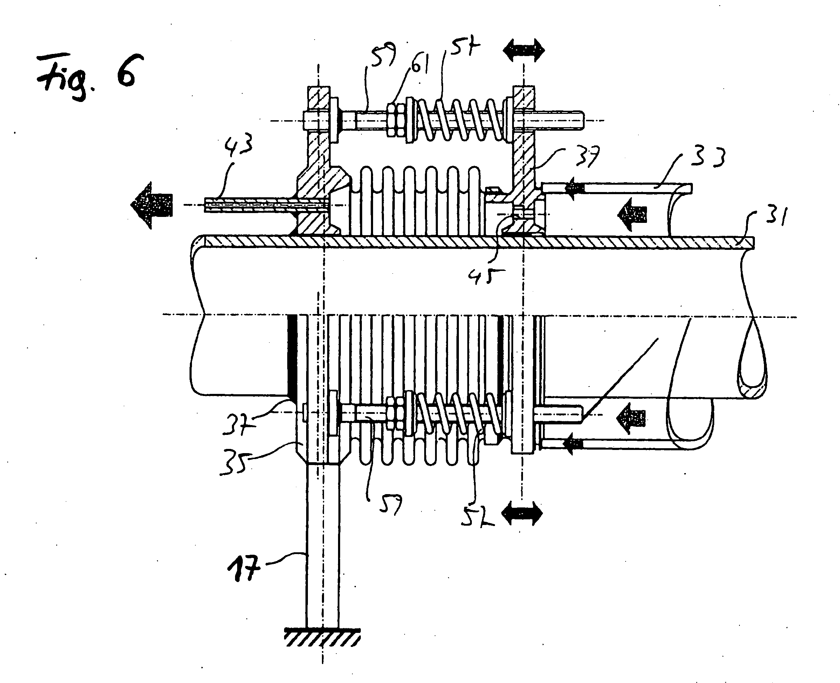

In Fig. 6 ist ein drittes Ausführungsbeispiel eines erfindungsgemäßen Absorberrohrs dargestellt. Der wesentliche Unterschied zu den zuvor beschriebenen Ausführungsbeispielen besteht darin, dass zwischen Festflansch 35 und Dichtflansch 39 ein Federelement, hier eine Druckfeder 57, angeordnet ist, welches auf einem Führungsbolzen 59 geführt wird. Der Führungsbolzen ist mit dem Festflansch 35 durch eine Mutter 61 verbunden, welche auf den Führungsbolzen 59 aufgeschraubt ist und auf die sich die Druckfeder 57 einenends abstützt. Durch Drehen der Mutter 61 kann die Vorspannung der Druckfeder 57 eingestellt werden. Durch diese Maßnahme erhöht sich die axiale Anpresskraft zwischen Dichtflansch 39 und Hüllrohr 33, was die Dichtheit dieser Verbindung erhöht.

Alternativ kann der Führungsbolzen auch aufgesteckt sein (nicht dargestellt).

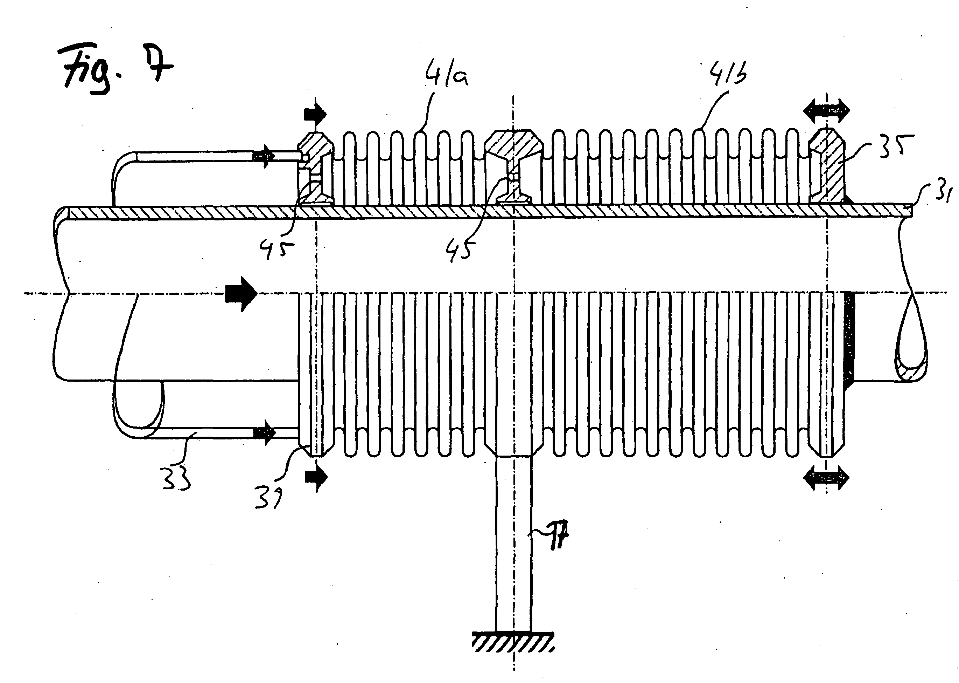

Bei dem Ausführungsbeispiel gemäß Fig. 7 ist die Funktion des Halters 17 und des Festflansches 35 getrennt. An dem Halter 17 ist ein Los-Flansch befestigt, der die axiale Ausdehnung des Zentralrohrs 31 ermöglicht. Bei diesem Ausführungsbeispiel ist der Kompensator 41 in einen ersten Abschnitt 41 a und einen zweiten Abschnitt 41 b unterteilt. Zwischen diesen Abschnitten ist der Halter 17, welcher das Zentralrohr 31 abstützt, angeordnet. Bei diesem Ausführungsbeispiel ist auch im Halter 17 eine Ausgleichsbohrung 45 vorgesehen.

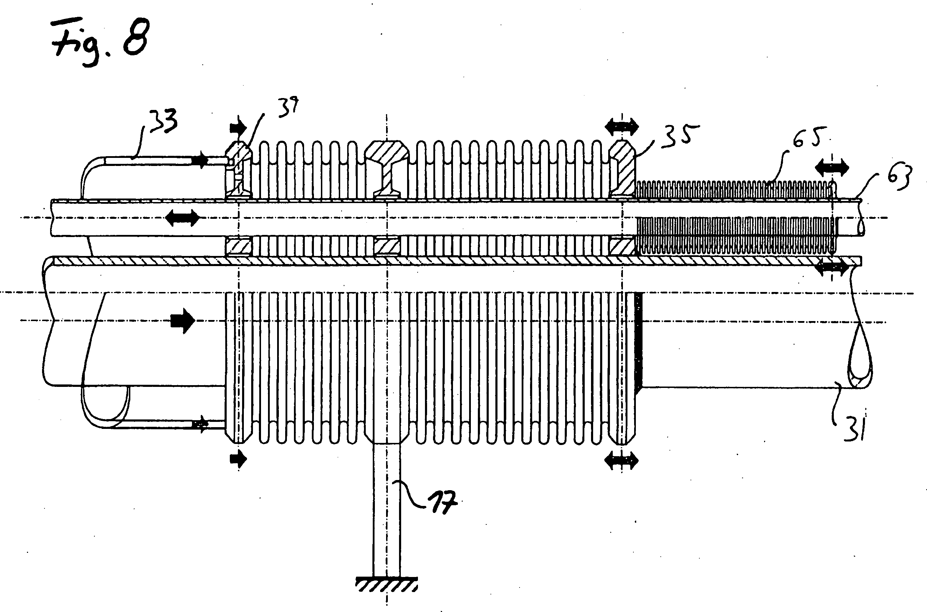

Bei dem Ausführungsbeispiel gem. Fig. 8 ist zusätzlich zu dem einen Zentralrohr 31 ein zweites Zentralrohr 63 vorhanden, welches in an sich gleicher Weise, wie das erste Zentralrohr 31 durch den Festflansch 35, den Halter 17 und den Dichtflansch 39 geführt ist. Wenn die Wärmedehnungen des ersten Zentralrohrs 31 und des zweiten Zentralrohrs 63 nicht gleich sind, kann an dem zweiten Zentralrohr ein zweiter Kompensator 65 vorgesehen werden. In diesem Fall ist das zweite Zentralrohr 63 axial verschiebbar in dem Festflansch 35 gelagert. Das zweite Zentralrohr 63 dient beispielsweise als Einspritzwasserleitung zur Regelung der Frischdampftemperatur.

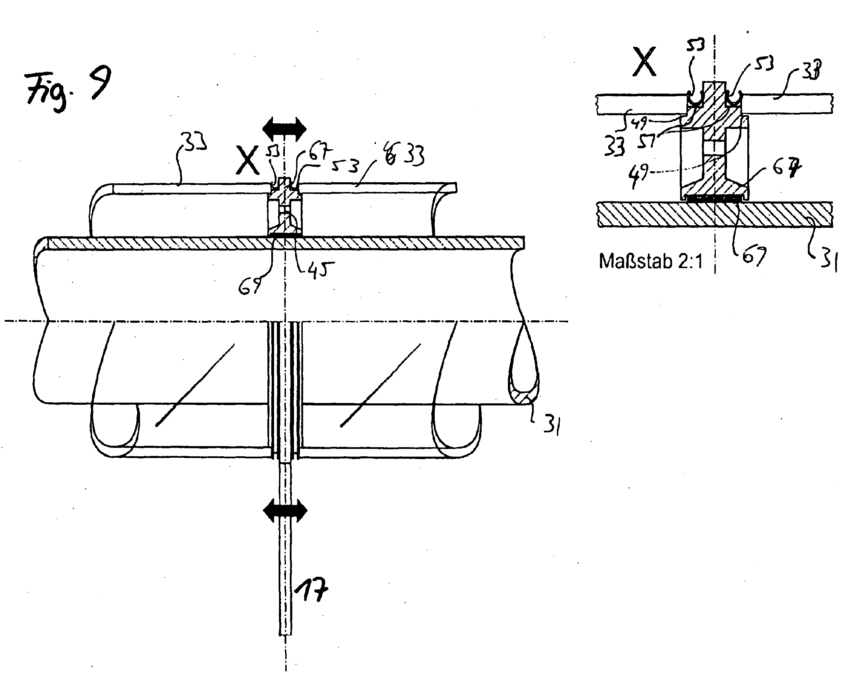

Fig. 9 zeigt einen Ausschnitt aus einem Absorberrohr 3 bei welchem zwei Segmente von Hüllrohren 33 durch einen Zentrierflansch 67 miteinander verbunden werden.

Der Zentrierflansch 67 ist im Prinzip gleich aufgebaut wie ein Dichtflansch 39, an der dem Hüllrohr 33 zugewandten Seite. Der einzige Unterschied besteht darin , dass der Zentrierflansch 67 an beiden Seiten ein Hüllrohr 33 aufnimmt, während der Dichtflansch 39 an einer Seite ein Hüllrohr 33 aufnimmt und an seiner anderen Seite mit dem Kompensator 41 verbunden ist. Ähnlich wie der Dichtflansch 39 ist der Zentrierflansch 67 axial verschiebbar auf dem Zentralrohr 31 gelagert, so dass die unterschiedlichen Wärmedehnungen von Hüllrohr 33 und Zentralrohr 31 ohne weiteres ausgeglichen werden können. Bei diesem Ausführungsbeispiel ist die Lagerbüchse 69 zwischen Zentrierflansch 67 und Zentralrohr 31 gut sichtbar.

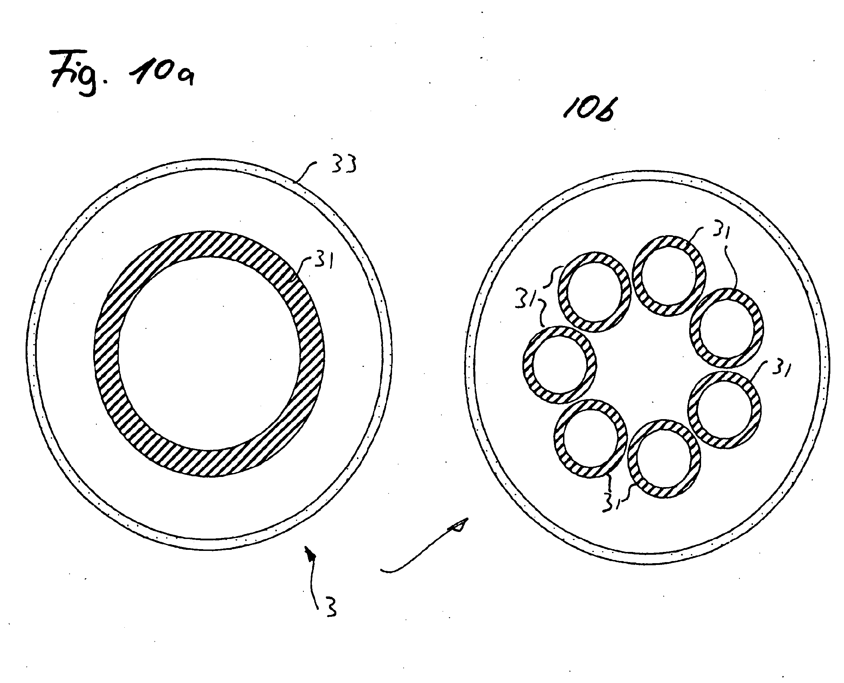

In Fig. 10 a ist der Querschnitt durch ein Absorberrohr 3 mit einem Zentralrohr 31 dargestellt.

In dem Ausführungsbeispiel gem. Fig. 10 b ist der Querschnitt durch ein Absorberrohr 3 mit mehreren Zentralrohren 31 dargestellt. Eines dieser Zentralrohre oder ein zusätzliches Rohr im Innern des Zentralrohrs kann bei dem Ausführungsbeispiel gemäß Fig. 10 b als Frischwasserleitung genutzt werden.

Die Ausführungsbeispiele der Fig. 4 bis 9 können ohne weiteres auf Absorberrohre mit mehreren Zentralrohren 31 übertragen werden.

Die Ausführungsbeispiele der Fig. 4, 5, 6 betreffen gasdichte Festflansch, während das Ausführungsbeispiel der Fig. 7 einen gasdichten Losflansch betrifft. Der Losflansch ermöglicht die axiale Verschiebung des Zentralrohrs durch Wärmedehnung. Dieser wird vorzugsweise am kalten Ende des Kollektors installiert. Zum Austausch defekter Glashüllrohre wird dieser Flansch aufgetrennt und anschließend wieder gasdicht mit dem Zentralrohr verbunden.

## Patentansprüche

1. Absorberrohr für Konzentratoren mit linear fokussierender Brennlinie, insbesondere für Parabolrinnenkollektoren und Fresnellinsenkollektoren, mit mindestens einem Zentralrohr (31), mit einem transparenten Hüllrohr (33), wobei das mindestens eine Zentralrohr (31) von dem Hüllrohr (33) gasdicht umschlossen wird, und mit einer Einrichtung zum Ausgleich axialer Längenänderungen von Zentralrohr (31) und Hüllrohr (33), wobei die Einrichtung zum Ausgleich axialer Längenänderungen ein Wellrohr (41), insbesondere einen Faltenbalg oder eine Rollmembran, einen axial verschiebbaren Dichtflansch (39) und einen mit dem Zentralrohr (31) gasdicht verbundenen Festflansch (35) umfasst, wobei das Wellrohr (41) den Dichtflansch (39) und den Festflansch (35) gasdicht miteinander verbindet, **dadurch gekennzeichnet, dass** der Dichtflansch (39) an dem mindestens einen Zentralrohr (31) gelagert ist, und dass an dem Dichtflansch (39) eine Aufnahme (47) für das Hüllrohr (33) vorgesehen ist.

2. Absorberrohr nach Anspruch 1, **dadurch gekennzeichnet, dass** die Aufnahme für das Hüllrohr (33) als Absatz (49) oder als Nut (47) in einer Stirnfläche des Dichtflansches (39) ausgeführt ist.

3. Absorberrohr nach einem der vorhergehenden Ansprüche, **dadurch gekennzeichnet, dass** zwischen Dichtflansch (39) und Hüllrohr (33) ein Dichtring (53), insbesondere ein O-Ring oder ein C-Ring, vorgesehen ist.

4. Absorberrohr nach Anspruch 3, **dadurch gekennzeichnet, dass** der Dichtring (53) aus Metall oder aus temperaturbeständigen organischen Werkstoffen, insbesondere Graphit, Polytetraflourethylen oder einer auch nur teilweisen Kombination dieser Materialien, hergestellt ist.

5. Absorberrohr nach einem der vorhergehenden Ansprüche, **dadurch gekennzeichnet, dass** an dem Festflansch (35) ein Anschlussstutzen (43) für eine Vakuumpumpe vorhanden ist.

6. Absorberrohr nach einem der vorhergehenden Ansprüche, **dadurch gekennzeichnet, dass** das Wellrohr von einem Halter (17) in einen ersten Abschnitt und einen zweiten Abschnitt unterteilt wird, dass der Halter (17) mit dem ersten Abschnitt und dem zweiten Abschnitt gasdicht verbunden ist, und dass der Halter (17) das mindestens eine Zentralrohr (31) radial abstützt.

7. Absorberrohr nach Anspruch 6, **dadurch gekennzeichnet, dass** der Halter (17) an einer Tragstruktur des Konzentrators befestigt werden kann.

8. Absorberrohr nach Anspruch 6, **dadurch gekennzeichnet, dass** der Halter (17) mindestens mittelbar mit dem Erdboden verbunden werden kann.

9. Absorberrohr nach einem der Ansprüche 6 bis 8, **dadurch gekennzeichnet, dass** zwischen Halter (17) und Zentralrohr (31) eine Lagerbüchse (54) vorgesehen ist.

10. Absorberrohr nach einem der vorhergehenden Ansprüche, **dadurch gekennzeichnet, dass** zwischen Dichtflansch (39) und Zentralrohr (31) eine Lagerbüchse (54) vorgesehen ist.

11. Absorberrohr nach einem der vorhergehenden Ansprüche, **dadurch gekennzeichnet, dass** zwischen Festflansch (35) und Dichtflansch (39) mindestens ein Federelement (57) vorgesehen ist.

12. Absorberrohr nach einem der vorhergehenden Ansprüche, **dadurch gekennzeichnet, dass** das Hüllrohr (33) aus mehreren Abschnitten zusammengesetzt ist, und dass jeweils zwischen zwei benachbarten Abschnitten ein Zentrierflansch (67) vorgesehen ist, und dass an beiden Seiten des Zentrierflansches (67) je eine Aufnahme für einen Abschnitt des Hüllrohrs (33) vorgesehen ist.

13. Absorberrohr nach Anspruch 12, **dadurch gekennzeichnet, dass** der Zentrierflansch (67) an dem mindestens einen Zentralrohr (31) gelagert ist.

14. Absorberrohr nach Anspruch 12 oder 13, **dadurch gekennzeichnet, dass** die Aufnahme für das Hüllrohr (33) als Absatz (49) oder als Nut in einer Stirnfläche des Zentrierflansches (67) ausgeführt ist.

15. Absorberrohr nach einem der Ansprüche 12 bis 14, **dadurch gekennzeichnet, dass** zwischen Zentrierflansch (67) und Hüllrohr (33) ein Dichtring (53), insbesondere ein O-Ring oder ein C-Ring, vorgesehen ist.

16. Absorberrohr nach Anspruch 15, **dadurch gekennzeichnet, dass** der Dichtring (53) aus Metall oder aus temperaturbeständigen organischen Werkstoffen, insbesondere Graphit, Polytetraflourethylen oder einer auch nur teilweisen Kombination dieser Materialien, hergestellt ist.

17. Absorberrohr nach einem der vorhergehenden Ansprüche, **dadurch gekennzeichnet, dass** das Zentralrohr (31) aus Kohlefaserkeramik oder Kohlefaserkohlenstoff (CFC) mit einem gasdichten Liner, vorzugsweise aus Stahl oder einer Nickelbasislegierung, hergestellt werden.

## Claims

1. Absorber tube for concentrators with linearly focussing focal line, in particular, for parabolic trough collectors and Fresnell lens collectors, comprising at least one central tube (31) with a transparent envelope tube (33), wherein the at least one central tube (31) is surrounded by the envelope tube (33) in a gas-tight fashion, and with means for compensating axial length changes of central tube (31) and envelope tube (33), wherein the means for compensating for the axial length changes comprises a corrugated tube, in particular, an expansion bellows or a roll membrane, an axially displaceable sealing flange (39) and a fixed flange (35) which is connected to the central tube (31) in a gas-tight fashion, the corrugated tube (41) connecting the sealing flange (39) and the fixed flange (35) in a gas-tight fashion **characterized in that** the sealing flange (39) is disposed on the at least one central tube (31), and that a receptacle (47) for the envelope tube (33) is provided on the sealing flange (39).

2. Absorber tube according to claim 1, **characterized in that** the receptacle for the envelope tube (33) is designed as a shoulder (49) or a groove (47) in an end face of the sealing flange (39).

3. Absorber tube according to any one of the preceding claims, **characterized in that** a sealing ring (53), in particular an 0-ring or a C-ring, is provided between the sealing flange (39) and the envelope tube (33).

4. Absorber tube according to claim 3, **characterized in that** the sealing ring (53) is produced from metal or temperature-resistant organic materials, in particular, graphite, polytetrafluoroethylene or an only partial combination of these materials.

5. Absorber tube according to any one of the preceding claims, **characterized in that** a connecting sleeve (43) for a vacuum pump is provided on the fixed flange (35).

6. Absorber tube according to any one of the preceding claims, **characterized in that** the corrugated tube is divided by a holder (17) into a first section and a second section, the holder (17) being connected to the first and second section in a gas-tight fashion, the holder (17) radially supporting the at least one central tube (31).

7. Absorber tube according to claim 6, **characterized in that** the holder (17) can be mounted to a supporting structure of the concentrator.

8. Absorber tube according to claim 6, **characterized in that** the holder (17) can be at least indirectly connected with the ground.

9. Absorber tube according to any one of the claims 6 through 8, **characterized in that** a bearing bushing (54) is provided between the holder (17) and the central tube (31).

10. Absorber tube according to any one of the preceding claims, **characterized in that** a bearing bushing (54) is provided between the sealing flange (39) and the central tube (31).

11. Absorber tube according to any one of the preceding claims, **characterized in that** at least one spring element (57) is provided between the fixed flange (35) and the sealing flange (39).

12. Absorber tube according to any one of the preceding claims, **characterized in that** the envelope tube (33) is composed of several sections, one centering flange (67) being provided between each of two neighboring sections, wherein one receptacle for a section of the envelope tube (33) is provided on each of the two sides of the centering flange (67).

13. Absorber tube according to claim 12, **characterized in that** the centering flange (67) is disposed on the at least one central tube (31).

14. Absorber tube according to claim 12 or 13, **characterized in that** the receptacle for the envelope tube (33) is designed as a shoulder (49) or a groove in one end face of the centering flange (67).

15. Absorber tube according to any one of the claims 12 through 14, **characterized in that** a sealing ring (53), in particular an 0-ring or a C-ring, is provided between the centering flange (67) and the envelope tube (33).

16. Absorber tube according to claim 15, **characterized in that** the sealing ring (53) is produced from metal or temperature-resistant organic materials, in particular, graphite, polytetrafluoroethylene or an only partial combination of these materials.

17. Absorber tube according to any one of the preceding claims, **characterized in that** the central tube (31) is produced from carbon fiber ceramic or carbon fiber carbon (CFC) with a gas-tight liner, preferably of steel or a nickel-based alloy.

## Revendications

1. Tube absorbeur destiné à des concentrateurs à ligne caustique de focalisation linéaire, en particulier à des collecteurs cylindro-paraboliques et des collecteurs à lentille de Fresnel, comportant au moins un tube central (31), comportant un tube enveloppe (33) transparent, le au moins un tube central (31) étant entouré de manière étanche au gaz par le tube enveloppe (33), et comportant un dispositif pour la compensation des changements de longueur en sens axial du tube central (31) et du tube enveloppe (33), le dispositif pour la compensation des changements de longueur en sens axial comprenant un tube ondulé (41), en particulier un soufflet ou une membrane enroulée, une bride d'étanchéité (39) pouvant être déplacée en sens axial et une bride fixe (35) reliée de manière étanche au gaz au tube central (31), le tube ondulé (41) reliant l'une à l'autre de manière étanche au gaz la bride d'étanchéité (39) et la bride fixe (35), **caractérisé en ce que** la bride d'étanchéité (39) est montée sur le au moins tube central (31) et **en ce que** sur la bride d'étanchéité (39) est prévu un logement (47) destiné au tube enveloppe (33).

2. Tube absorbeur selon la revendication 1, **caractérisé en ce que** le logement destiné au tube enveloppe (33) est réalisé sous la forme d'un épaulement (49) ou d'une rainure (47) dans une surface frontale de la bride d'étanchéité (39).

3. Tube absorbeur selon une des revendications précédentes, **caractérisé en ce qu'**entre la bride d'étanchéité (39) et le tube enveloppe (33) est prévu un joint d'étanchéité (53), en particulier un joint torique ou un joint en forme de croissant.

4. Tube absorbeur selon la revendication 3, **caractérisé en ce que** le joint d'étanchéité (53) est constitué de métal ou de matériaux organiques résistant à la température, en particulier de graphite, de polytétrafluoréthylène, ou d'une combinaison même partielle de ces matières.

5. Tube absorbeur selon une des revendications précédentes, **caractérisé en ce que** sur la bride fixe (35) est prévu un raccord (43) destiné à une pompe à vide.

6. Tube absorbeur selon une des revendications précédentes, **caractérisé en ce que** le tube ondulé est divisé par un support (17) en une première section et une deuxième section, **en ce que** le support (17) est relié de manière étanche au gaz à la première section et à la deuxième section, et **en ce que** le support (17) soutient radialement le au moins un tube central (31).

7. Tube absorbeur selon la revendication 6, **caractérisé en ce que** le support (17) peut être fixé à une structure porteuse () du concentrateur.

8. Tube absorbeur selon la revendication 6, **caractérisé en ce que** le support (17) peut être relié au moins indirectement au sol.

9. Tube absorbeur selon une des revendications 6 à 8, **caractérisé en ce qu'**entre le support (17) et le tube central (31) est prévue une bague de palier (54).

10. Tube absorbeur selon une des revendications précédentes, **caractérisé en ce qu'**entre la bride d'étanchéité (39) et le tube central (31) est prévue une bague de palier (54).

11. Tube absorbeur selon une des revendications précédentes, **caractérisé en ce qu'**entre la bride fixe (35) et la bride d'étanchéité (39) est prévu au moins un élément élastique (57).

12. Tube absorbeur selon une des revendications précédentes, **caractérisé en ce que** le tube enveloppe (33) est composé de plusieurs sections, et **en ce qu'**entre deux sections adjacentes est chaque fois prévue une bride de centrage (67), et **en ce que** sur chacun des deux côtés de la bride de centrage (67) est prévu un logement destiné à une section du tube enveloppe (33).

13. Tube absorbeur selon la revendication 12, **caractérisé en ce que** la bride de centrage (67) est montée sur le au moins un tube central (31).

14. Tube absorbeur selon la revendication 12 ou 13, **caractérisé en ce que** le logement destiné au tube enveloppe (33) est réalisé sous la forme d'un épaulement (49) ou d'une rainure dans une surface frontale de la bride de centrage (67).

15. Tube absorbeur selon une des revendications 12 à 14, **caractérisé en ce qu'**entre la bride de centrage (67) et le tube enveloppe (33) est prévu un joint d'étanchéité (53) en particulier un joint torique ou un joint en forme de croissant.

16. Tube absorbeur selon la revendication 15, **caractérisé en ce que** le joint d'étanchéité (53) est constitué de métal ou de matériaux organiques résistant à la température, en particulier de graphite, de polytétrafluoréthylène, ou une d'une combinaison même partielle de ces matières.

17. Tube absorbeur selon une des revendications précédentes, **caractérisé en ce que** le tube central (31) est constitué de céramique renforcée de fibres de carbone ou de carbone renforcé de fibres de carbone (CFC), avec une doublure étanche au gaz, de préférence en acier ou en un alliage à base de nickel.
